# EUROPÄISCHE PATENTSCHRIFT

(11) **EP 3 092 433 B1**
(45) Veröffentlichungstag und Bekanntmachung des Hinweises auf die Patenterteilung: **20.05.2020**
(21) Anmeldenummer: 15702127.0
(22) Anmeldetag: 08.01.2015
(51) Int. Cl.: F16L 53/00

(54) **KONFEKTIONIERTE BEHEIZBARE MEDIENLEITUNG SOWIE VERFAHREN ZU DEREN HERSTELLUNG**
PREFABRICATED HEATABLE MEDIA LINE AND A METHOD FOR THE PRODUCTION OF SAME
CONDUITE DE FLUIDE CHAUFFANTE SURMOULÉE ET PROCÉDÉ DE FABRICATION DE CETTE DERNIÈRE

(30) Priorität: 08.01.2014 DE 102014000057; 08.04.2014 DE 102014005093
(43) Veröffentlichungstag der Anmeldung: 16.11.2016
(73) Patentinhaber: Voss Automotive GmbH, 51688 Wipperfürth (DE)
(72) Erfinder: ETSCHEID, Tobias, 51789 Lindlar (DE); RUDEL, Steve, 42499 Hückeswagen (DE); PLIETSCH, Reinhard, 42929 Wermelskirchen (DE); SCHWARZKOPF, Otfried, 51515 Kürten (DE); GMEINER, Swen, 51709 Marienheide (DE)
(74) Vertreter: Rebbereh, Cornelia
(86) Internationale Anmeldenummer: PCT/EP2015/000020
(87) Internationale Veröffentlichungsnummer: WO 2015/104218

(56) Entgegenhaltungen:
- EP-A1- 0 258 139
- WO-A1-2007/073286
- WO-A1-2010/032017
- GB-A- 2 423 686
- US-A- 4 591 700

## Beschreibung

Die Erfindung betrifft eine konfektionierte beheizbare Medienleitung mit zumindest einer Medienleitung mit Leitungswandung und innerem Leitungslumen und zumindest einem mit der Medienleitung verbundenen Leitungsverbinder zum Anschluss der Medienleitung an zumindest eine Komponente und/oder eine andere konfektionierte Medienleitung, und zumindest einer Heizeinrichtung, die entlang der Medienleitung und dem Leitungsverbinder gewendelt ist und/oder sich unter Umlenkungen erstreckt, und zumindest einem isolierenden Hüllsystem, das die Medienleitung und den Leitungsverbinder zumindest größtenteils in axialer umfänglicher Erstreckung umgibt, sowie ein Verfahren zum Herstellen einer solchen konfektionierten beheizbaren Medienleitung.

Konfektionierte beheizbare Medienleitungen mit zumindest einer beheizbaren Medienleitung und zumindest einem beheizbaren Leitungsverbinder sind im Stand der Technik bekannt. Insbesondere in Fahrzeugen sind Medienleitungen zum Leiten von flüssigen Medien vorgesehen. Die Leitungsverbinder sind üblicherweise endseitig an einer Medienleitung angeordnet und mit dieser verbunden. Sie dienen zum Verbinden von zumindest zwei Medienleitungen oder zum Anschlussverbinden einer Medienleitung an ein beliebiges Aggregat bzw. eine beliebige Komponente, wie eine Dosiereinheit oder eine Pumpe eines Kraftfahrzeugtanks bzw. eines Kraftfahrzeugmotors. Bei niedrigeren Temperaturen drohen die Medien in Medienleitung und Leitungsverbinder einzufrieren, weshalb es üblich ist, eine Beheizbarkeit der Medienleitung und des Leitungsverbinders vorzusehen. Durch die Medienleitung und die mit dieser verbundenen Leitungsverbinder werden oftmals solche Medien geführt, die aufgrund eines relativ hohen Gefrierpunktes bereits bei noch recht hohen Umgebungstemperaturen zum Gefrieren neigen, wodurch die Funktionsfähigkeit beispielsweise eines Fahrzeugs beeinträchtigt oder sogar erheblich gestört werden kann. Ersichtlich ist dies insbesondere bei Wasserleitungen für Scheibenwaschanlagen der Fall und ebenso bei Medienleitungen, mittels derer wässrige Harnstofflösung als Medium transportiert wird, die als NO_{×}-Reaktionsadditiv für Dieselmotoren mit sogenannten SCR-Katalysatoren eingesetzt werden.

Zum Beheizen von Medienleitung und Leitungsverbindern ist es u.a. bekannt, eine Heizeinrichtung in Form von beispielsweise Heizdrähten oder Heizlitzen außenseitig um die Medienleitung und die Leitungsverbinder herum anzuordnen, zumeist in Form einer Wendelung. Gerade im Bereich der Leitungsverbinder sind auch Rückführungen der Heizdrähte bzw. der Heizlitzen häufig erforderlich, wie beispielsweise bei dem Aufbau nach DE 10 2010 032 188 A1, um diese mit elektrischen Zuleitern zu versehen bzw. endseitig elektrisch zu kontaktieren, mittels derer ein Anschluss an eine Strom- bzw. Spannungsversorgung möglich ist. Gerade aufgrund von sich bei diesen Rückführungen ergebenden Überlappungen der Heizleiter oder -litzen, die zu einer lokalen Litzenanhäufung führen, und ebenso im Bereich von Crimpstellen und in Übergangsbereichen zu den Leitungsverbindern können sogenannte Hotspotbereiche auftreten, in denen eine lokale übermäßig hohe Wärmezufuhr zu einer Beschädigung der Medienleitung bzw. des Leitungsverbinders führen kann. Da üblicherweise im Bereich der Leitungsverbinder der größte Wärmebedarf besteht, da die Wandstärke der Leitungsverbinder üblicherweise größer ist als die der Medienleitung, kommt es gerade dort zur Hotspotbildung. Derartige Hotspots können ferner durch Litzen, die in der Luft hängen, wie beispielsweise an Übergängen, Kanten und Umlenkungen, hervorgerufen werden. Ebenso können Hotspots durch Isolation der Litzen beispielsweise durch Schrumpfschläuche oder auch durch von außen aufgeprägte Umgebungstemperaturen auftreten, die zu einer lokal übermäßigen Wärmezufuhr führen. Litzen, die nahe nebeneinander angeordnet sind, können ebenfalls zu einem gegenseitigen übermäßigen Beheizen und somit zu einer Hotspotbildung führen, ferner Kombinationen aller genannter problematischer Anordnungen.

Eine solche Überlagerung und Anhäufung von Litzen bei deren Rückführungen im Bereich von Leitungsverbindern, die von einem isolierenden Hüllsystem in Form von Kappen umgeben sind, kann beispielsweise der DE 10 2010 032 188 A1 oder der WO 2013/053492 A1 entnommen werden. Bei beiden Lösungen des Standes der Technik sind mehrere Litzen auf der Medienleitung und den Leitungsverbindern angeordnet und jeweils in Reihe geschaltet. Gemäß der WO 2013/053492 A1 wird ein differenzierter Wärmeeintrag und/oder -austrag an den Anschlussenden der Medienleitung vorgesehen. Die Differenzierung des Wärmeeintrags bzw. des Wärmeaustrags erfolgt anwendungsspezifisch. Da jeweils jedoch eine individuelle Auslegung der beheizbaren Medienleitung erforderlich ist, entsteht eine hohe Varianz bezüglich der konfektionierten beheizbaren Medienleitung, wobei die Längenabhängigkeit der Litzen zueinander die Variantenvielfalt erhöht. Eine große Anzahl an unterschiedlichen Leitungslängen erfordert jeweils eine neue Litzenauswahl bzw. Litzenapplikation auf Medienleitung und Leitungsverbinder. Hiermit verbunden sind zahlreiche unterschiedliche Litzenwiderstände, Litzensteigungen auf der Medienleitung und Litzen im Hinblick auf deren Widerstand auf dem Leitungsverbinder, was zu hohen Kosten bei der Herstellung der jeweiligen konfektionierten Medienleitungen aufgrund der individuellen Auslegung führt.

Eine ebenfalls bekannte Anordnungsmöglichkeit der Heizeinrichtung besteht in der Integration von Heizlitzen bzw. Heizleitern in die Wandung der Medienleitung, wie beispielsweise in der DE 10 2011 018 243 A1 bzw. der
DE 10 2010 051 550 A1 offenbart. Bei beiden Lösungen des Standes der Technik wird jeweils die Heiztechnik in die Medienleitungswandung integriert, was zu einer geringeren Baugröße im Hinblick auf den Durchmesser der Medienleitung führt. Durch diese Integration der Heiztechnik in die Medienleitungswandung kann ein sogenannter PTC-Effekt erzielt werden, bei dem bei steigender Temperatur der Stromdurchfluss reduziert wird und somit die Heizleistung abnimmt. Unter PTC wird ein Positiver Temperatur Koeffizient verstanden, unter dem PTC-Effekt ein Effekt, bei dem der elektrische Widerstand sich bei steigender Temperatur vergrößert. Dies führt dazu, dass die Medienleitung bezüglich ihrer Beheizung bei zu hohen Temperaturen abgeschaltet wird, wenn die Heizleistung auf Null absinkt. Als problematisch erweist sich das Einbetten der Heiztechnik in die Medienleitung jedoch beim Kontaktieren der Heizleiter. Ferner können bei einer schlechten Einbettung der Heizleiter hohe Übergangswiderstände auftreten. Durch solche Übergangswiderstände kann es zu Degradationseffekten bei sich veränderndem Widerstand kommen, so dass die Beheizung in diesem Bereich sich verschlechtert und letztlich vollständig ausfallen kann. Ebenfalls ist es möglich, dass das durch die Medienleitung strömende Medium durch Permeation innerhalb der Wandung der Medienleitung zu den Heizleitern gelangt und diese angreift, wie beispielsweise bei einem Medium in Form einer wässrigen Harnstofflösung, die beispielsweise unter der Bezeichnung AdBlue® angeboten wird. Bei Anordnen von Heizleitern bzw. einer Heizeinrichtung in der Wandung der Medienleitung können hierdurch keine vollständig beheizten Leitungsverbinder in Form von Kupplungen ausgebildet werden, da aufgrund des Vorsehens einer Stecköffnung in der Kupplung, in die ein anderer Leitungsverbinder in Form eines Steckers eingefügt werden kann, die mit dem Heizleiter versehene Medienleitung nicht bis etwa zum Ende der Kupplung geführt werden kann. Ein Teil der Kupplung bleibt unbeheizt, nämlich der Teil, in den der Stecker eingefügt wird. Eine weitere Problematik besteht darin, dass bei Anordnen einer Leitschicht in einer Medienleitungswandung die Leitfähigkeit durch den Produktionsprozess der Leitung beeinflusst wird, somit durch eine große Anzahl an Parametern. Daher ist ein adaptives Aufbringen der Heizeinrichtung bzw. getrenntes Vorsehen von Heiztechnik und Medienleitung deutlich prozesssicherer.

Der vorliegenden Erfindung liegt daher die Aufgabe zugrunde, eine konfektionierte beheizbare Medienleitung sowie ein Verfahren zur Herstellung von dieser vorzusehen, bei der die genannten Nachteile, die bei den konfektionierten beheizbaren Medienleitung des Standes der Technik auftreten können, nicht mehr auftreten, die insbesondere kostengünstig in unterschiedlichsten Varianten hergestellt werden kann und bei der das Auftreten von Hotspotbereichen sicher vermieden werden kann und bei der dennoch eine optimale Beheizung von Medienleitung und Leitungsverbindern möglich ist.

Die Aufgabe wird für eine konfektionierte beheizbare Medienleitung nach dem Oberbegriff des Anspruchs 1 dadurch gelöst, dass die Heizeinrichtung eine Heizbandlitze ist, die zumindest zwei Kontaktleiter und zumindest einen elektrisch leitfähigen Kunststoff mit elektrisch leitfähigen Partikeln in Nanogröße in Kontakt mit den Kontaktleitern umfasst, wobei die Heizbandlitze durch ihre Geometrie und/oder Werkstoffauswahl und/oder Werkstoffbeschaffenheit flexibel und biegbar ist und außenseitig auf der Medienleitung und dem Leitungsverbinder zumindest teilweise in Wendelform angeordnet und an einem Ende mit elektrischer Kontaktierung und an dem anderen Ende mit Isolation der Kontaktleiterenden versehen ist, wobei zumindest ein Endabschnitt der Heizbandlitze im Bereich einer der Leitungsverbinder angeordnet ist. Für eine Heizbandlitze zur Verwendung mit der konfektionierten Medienleitung wird die Aufgabe dadurch gelöst, dass die Heizbandlitze zumindest zwei Kontaktleiter und zumindest einen elektrisch leitfähigen Kunststoff mit elektrisch leitfähigen Partikeln in Nanogröße in Kontakt mit den Kontaktleitern umfasst und flexibel und biegbar ist. Für ein Verfahren nach dem Oberbegriff des Anspruchs 12 wird die Aufgabe dadurch gelöst, dass eine Medienleitung mit einer Heizbandlitze bewickelt vorkonfektioniert wird, die Medienleitung anwendungsspezifisch in einer ersten Länge abgelängt wird, die der gewünschten Medienleitungslänge zuzüglich einer Zugabelänge entspricht, die die zum Umwickeln des zumindest einen Leitungsverbinders und eines Übergangsbereichs zwischen Medienleitung und Leitungsverbinder erforderlichen Heizbandlitzenlänge trägt, die Heizbandlitze von dem der Zugabelänge entsprechenden Medienleitungsabschnitt abgewickelt wird, die Medienleitung in der gewünschten Medienleitungslänge zu der Medienleitung abgelängt wird, die Medienleitung mit dem zumindest einen Leitungsverbinder versehen wird, der zumindest eine Leitungsverbinder mit dem von dem zumindest einen zugegebenen Medienleitungsabschnitt abgewickelten freien Heizbandlitzenende umwickelt wird, und ein erstes Ende der Heizbandlitze mit einer Isolation der Kontaktleiterenden und ein zweites Ende der Heizbandlitze mit einer elektrischen Kontaktierung der Kontaktleiterenden versehen wird. Weiterbildungen der Erfindung sind in den abhängigen Ansprüchen definiert. Dadurch werden eine konfektionierte beheizbare Medienleitung sowie ein Verfahren zu deren Herstellung geschaffen, bei denen anstelle des Vorsehens mehrerer Heizleiter außenseitig auf der Medienleitung und den Leitungsverbindern oder des Einbringens von Heizleitern in das Innere der Wandung der Medienleitung nur eine Heizbandlitze auf Medienleitung und Leitungsverbindern aufgebracht wird. Vorteilhaft erstreckt sich ein und dieselbe Heizbandlitze auf der Medienleitung und dem zumindest einen Leitungsverbinder. Das Umwickeln der Medienleitung und des zumindest einen endseitig an dieser angeordneten Leitungsverbinders mit der einen Heizbandlitze ist zum Beheizen von Medienleitung und Leitungsverbinder bzw. des dort hindurchströmenden Mediums ausreichend. Unter einer Heizbandlitze wird hier eine Heizeinrichtung verstanden, die zumindest zwei Kontaktleiter aufweist, die mit Abstand zueinander parallel zueinander geführt und in einen elektrisch leitfähigen Kunststoff eingebettet sind, wobei das Kunststoffmaterial so ausgebildet ist, dass es elastisch bzw. flexibel und biegsam ist, so dass die Heizbandlitze die gewünschte Flexibilität und Biegsamkeit aufweist, um auf der Außenseite von Medienleitung und Leitungsverbindern wendelförmig angeordnet zu werden. Durch das Einbetten der Kontaktleiter in den elektrisch leitfähigen Kunststoff wird eine Parallelschaltung von Widerständen vorgesehen im Unterschied zu der Reihenschaltung der Heizleiter im Stand der Technik beispielsweise der WO 2013/053492 A1 bzw. der DE 10 2010 032 188 A1, bei der das Vorsehen mehrerer Heizleiter über den Umfang der Medienleitung und der Leitungsverbinder verteilt oder eines rückgeführten Heizleiters erforderlich ist. In Dokument US4591700 ist eine ähnliche konfektionierte beheizbare Medienleitung beschrieben.

An einem Ende der Heizbandlitze wird eine Isolation der Kontaktleiter, die in dieser angeordnet sind, vorgesehen und an dem anderen Ende eine elektrische Kontaktierung über elektrische Zuleiter, die an eine Strom- bzw. Spannungsversorgung angeschlossen werden (können). Das Anordnen der Heizbandlitze auf der Außenseite der Medienleitung und des zumindest einen Leitungsverbinders, der endseitig an der Medienleitung angeordnet ist, ist daher sehr viel leichter möglich als bei Vorsehen zweier oder mehrerer außenseitig auf Medienleitung und ggf. den Leitungsverbindern angeordneter Heizleiter. Eine endseitige Isolation der Kontaktleiterenden kann beispielsweise durch einen Schrumpfschlauch, durch Silikonkappen oder durch Umspritzen oder Verkleben mit einem isolierenden Material vorgesehen werden.

Die Heizbandlitze kann Kontaktleiter in Form von Litzen oder in Form von Drähten umfassen, die sich parallel zueinander entlang der Heizbandlitze, umgeben von dem zumindest einen elektrisch leitfähigen Kunststoff, erstrecken. Das Ausbilden in Form von Litzen eignet sich besonders, um eine Degradation der Heizbandlitze zu vermeiden. Beim Ausbilden der Kontaktleiter in Form von Drähten kann das Problem auftreten, dass sich das Kunststoffmaterial, in das die Kontaktleiter eingebettet sind, nicht dauerhaft an den Drähten anbindet. Aus diesem Grunde wird das Vorsehen von Litzen als Kontaktleiter hier bevorzugt.

Die elektrische Leitfähigkeit des Kunststoffs, in den die Kontaktleiter eingebettet sind, wird durch elektrisch leitfähige Partikel in Nanogröße geschaffen. Weiter vorteilhaft kann der elektrisch leitfähige Kunststoff mit metallischen, aber auch mit nicht-metallischen elektrisch leitfähigen Partikeln dotiert sein, wie insbesondere mit Kohlefasern oder Leitruß. Durch das Vorsehen der Parallelschaltung der beiden Kontaktleiter mit dazwischen angeordnetem elektrisch leitfähigem Kunststoff kann ein PTC-Effekt erzielt werden, also eine temperaturabhängige Leistungsbegrenzung, die zu einer Eigensicherheit und dem Vermeiden eines Überhitzens führt und insbesondere das Auftreten von sogenannten Hotspotbereichen vermeidet. Der PTC-Effekt tritt u.a. durch die durch die leitfähigen Partikel geschaffenen Leitpfade auf, ebenso durch die Übergangswiderstände zwischen dem ersten Kontaktleiter der Heizbandlitze und dem Kunststoff und dem zweiten Kontaktleiter und dem Kunststoff, wobei die beiden Übergangswiderstände und der Widerstand des elektrisch leitfähigen Kunststoffs zueinander in Reihe geschaltet sind und diese Reihenschaltung der drei Widerstände unendlich häufig zwischen den beiden Kontaktleitern vorhanden ist, wobei jede der Reihenschaltungen der drei Widerstände zueinander parallel geschaltet ist.

Die Heizbandlitze kommt aufgrund ihrer besonderen Ausgestaltung durchgängig ohne Verschalten mit einer weiteren Heiztechnik aus. Die Heizbandlitze ist vorteilhaft an zumindest einem Ende rückführungsfrei auf dem jeweiligen Leitungsverbinder angeordnet, insbesondere zumindest an dem mit der Isolation versehenen Ende oder an dem mit der Isolation versehenen Ende und an dem mit der elektrischen Kontaktierung versehenen Ende, insbesondere sind nur elektrische Zuleiter der elektrischen Kontaktierung rückgeführt. Weiter vorteilhaft ist die Heizbandlitze crimpstellenfrei als Einlitzer ausgebildet. Ihre Anordnung auf Medienleitung und Leitungsverbindern erfolgt beim bevorzugten Anordnen der Heizbandlitze in Form einer Wendelung außenseitig auf Medienleitung und Leitungsverbinder weitestgehend rückführungsfrei und crimpstellenfrei, so dass eine Hotspotbildung sicher vermieden werden kann.

Das für den elektrisch leitfähigen Kunststoff verwendete Kunststoffmaterial der Heizbandlitze ist vorteilhaft ein Kunststoffmaterial, das für einen Temperaturbereich von zumindest 140 °C geeignet ist, um auch Temperaturen im Motorraum eines Fahrzeugs problemlos ertragen zu können, die dauerhaft bei 160 °C und kurzfristig bei 180 °C liegen können. Das Kunststoffmaterial der Heizbandlitze, in dem die Kontaktleiter angeordnet sind, besteht daher vorteilhaft aus einem thermoplastischen Elastomer, wie beispielsweise einem thermoplastischen Polyesterelastomer bzw. thermoplastischen Copolyester (TPE-E bzw. TPC). Ferner ist es möglich, als Kunststoffmaterial Silikon zu verwenden. Grundsätzlich kann auch ein Fluorpolymer verwendet werden, das allerdings im Vergleich zur thermoplastischen Elastomeren oder Silikon teuer ist. Möglich ist ferner die Verwendung von Polyphthalamid (PPA), das sich allerdings nicht so leicht applizieren lässt wie beispielsweise thermoplastische Elastomere oder Silikon. Möglich ist ferner die Verwendung von Ethylentetrafluorethylen (ETFE) oder vernetztem Polyethylen (XPE), die jedoch beide im Vergleich zu thermoplastischem Elastomer teuer und nicht halogenfrei sind. Die Verwendung von thermoplastischen Elastomeren wird daher bevorzugt. Im Hinblick auf eine gewünschte Temperaturfestigkeit der Medienleitung besteht diese vorzugsweise aus PPA.

Medienleitung und mit dieser verbundene Leitungsverbinder können adaptiv mit der Heizbandlitze bewickelt werden, also jeweils anwendungsspezifisch in der gewünschten Form und Menge und mit der gewünschten Steigung beim Bewickeln. Um ein optimales Bewickeln der Medienleitung und des mit dieser verbundenen zumindest einen Leitungsverbinders zu ermöglichen, weist die Heizbandlitze ein Höhen-zu-Breiten-Verhältnis von 0,3 bis 0,7 auf. Die Höhe der Heizbandlitze entspricht etwa dem 1,2 bis 1,5fachen der Stärke der Leitungswandung der Medienleitung Hierdurch sind ein optimales Umwickeln der Medienleitung mit der Heizbandlitze und ein optimales Beheizen der Medienleitung möglich. Die Höhe der Heizbandlitze kann beispielsweise 1,2 bis 1,5 mm betragen und die Breite der Heizbandlitze 2 bis 3 mm. Diese Abmessungen sind geeignet, um eine Heizbandlitze herzustellen, die z.B. sowohl um eine Medienleitung mit einer Abmessung von 4 x 1 mm herum als auch um endseitig an dieser angebrachte Leitungsverbinder herum gewunden werden kann und eine optimale Beheizung des durch die Medienleitung mit endseitigen Leitungsverbindern strömenden Mediums ermöglicht. Die Steigung der Heizbandlitze auf der Medienleitung beträgt vorteilhaft 40 bis 60 mm, insbesondere 60 bis 80 mm. Ferner kann das Verhältnis der Steigung der Heizbandlitze auf der Medienleitung zu dem Medienleitungsdurchmesser 2 bis 3 Steigungen pro Medienleitungsdurchmesser betragen. Da bei einer Heizbandlitze mehr Material als bei einer herkömmlichen Heizlitze verwendet wird, erweist sich eine Steigung von 60 bis 80 mm als besonders vorteilhaft, da bei dieser eine optimale Applikation auf der Medienleitung möglich ist.

Die Heizbandlitze kann lediglich die Kontaktleiter und den außenseitig um diese herum angeordneten elektrisch leitfähigen Kunststoff umfassen, also keine außenseitige Isolation. Ferner ist es möglich, die Heizbandlitze mit außenseitiger isolierender Ummantelung zu versehen. Solche isolierenden Ummantelungen können beispielsweise aus PFA bestehen, also aus Perfluoralkoxylalkan. Ferner kann sie aus dem gleichen Werkstoff wie dem Kunststoffmaterial, das dotiert wird, um elektrisch leitfähig zu sein, und das zwischen den Kontaktleitern der Heizbandlitze angeordnet ist, ausgebildet werden, allerdings undotiert sein. Ebenfalls kann der gleiche isolierende Werkstoff verwendet werden, der zum Isolieren der Enden der Kontaktleiter an dem einen Ende der Heizbandlitze verwendet wird, um ein stoffschlüssiges Abdichten zu ermöglichen.

Die Heizbandlitze kann zudem zumindest eine zwischen den beiden Kontaktleitern angeordnete, diese gegeneinander gegen einen Kurzschluss isolierende Einrichtung aufweisen, insbesondere in Form einer nicht-leitenden Folie, eines nicht-leitenden Bandes oder eines nicht-leitenden Fadens oder Sperrbandes. Die gegen einen Kurzschluss isolierende Einrichtung wird also im Inneren der Heizbandlitze zwischen den zumindest zwei Kontaktleitern von dieser angeordnet und erstreckt sich parallel zu diesen zwischen diesen innerhalb der Heizbandlitze. Hierdurch entsteht eine gegen Kurzschluss der Kontaktleiter sichere kompakte Heizbandlitze, die nur einen geringen Materialeinsatz zusätzlich benötigt, beispielsweise in Form der genannten nicht-leitenden Folie, des nicht-leitenden Bandes bzw. des nicht-leitenden Fadens oder einer anderen nicht-leitenden Einrichtung.

Die Isolation der Kontaktleiterenden kann nicht nur durch eine isolierende Einrichtung erfolgen, die auf das Ende der Heizbandlitze bzw. deren Kontaktleiterenden aufgebracht wird, sondern auch durch Einbetten der Kontaktleiterenden in einen Teil eines durch Umspritzen des Leitungsverbinders erzeugten Hüllsystems geschaffen werden. An Stelle eines zusätzlichen Vorsehens einer Isolation der Kontaktleiterenden der Kontaktleiter der Heizbandlitze kann eine solche Isolation somit zugleich mit dem Herstellen der um den Leitungsverbinder herum gespritzten isolierenden Hülle erfolgen, wenn die Kontaktleiterenden beim Umspritzen des Leitungsverbinders, auf dem das Ende der Heizbandlitze angeordnet ist, in die Spritzmasse mit eingebettet wird. Die Kontaktleiterenden werden dementsprechend von der Spritzmasse endseitig umschlossen und dabei isoliert.

Zum Vermeiden eines Anhebens der Heizbandlitze von der Oberfläche der Medienleitung kann zumindest eine Fixiereinrichtung vorgesehen sein, die die Heizbandlitze außenseitig auf der Medienleitung fixiert, insbesondere ein Klebe-, Gewebe- oder Gewebeklebeband und/oder zumindest ein Schaummaterial und/oder zumindest ein Schrumpfschlauch. Ferner ist es möglich, die Heizbandlitze außenseitig an der Medienleitung anzuschmelzen und hierdurch in ihrer Position zu fixieren. Ebenso kann eine Haftverbindung zwischen Heizbandlitze und der Außenseite der Medienleitung vorgesehen werden, die beispielweise durch eine haftende Oberfläche der Medienleitung und/oder durch das Vorsehen einer haftenden Oberfläche der Heizbandlitze vorgesehen werden kann. Zum Fixieren der Heizbandlitze auf der Außenseite der Medienleitung kann dort beispielsweise eine selbstklebende Schicht außenseitig aufextrudiert werden. Ebenfalls ist es selbstverständlich möglich, die Heizbandlitze außenseitig mit einer entsprechenden selbstklebenden Schicht zu ummanteln, um die Fixierung auf der Außenseite der Medienleitung zu bewirken. Das Vermeiden eines Abhebens der Heizbandlitze von der Oberfläche der Medienleitung führt zu einem besseren Wärmeübergang in die Wandung der Medienleitung und dementsprechend in das durch die Medienleitung strömende Medium.

Wird ein Klebe-, Gewebe- oder Gewebeklebeband zum Fixieren der Heizbandlitze auf der Außenseite der Medienleitung vorgesehen, kann dieses unter zumindest randseitigem Überlappen auf der Heizbandlitze und der Außenseite der Medienleitung aufgewickelt werden. Ferner ist auch ein überlappungsfreies Aufbringen des Bandes auf der Außenseite der Medienleitung und der Heizbandlitze möglich. Auch kann das Gewebeklebeband, Gewebeband oder Klebeband beim Umwickeln von Medienleitung mit aufgebrachter Heizbandlitze überkreuzt werden. Es können somit unterschiedlichste Varianten beim fixierenden Umwickeln der mit der Heizbandlitze außenseitig umgebenen Medienleitung vorgesehen werden.

Herkömmliche Heizbänder, wie sie beispielsweise in der US 4,200,973 A bzw. der US 7,203,419 D2 offenbart sind, lassen sich nicht auf der Außenseite der Medienleitung und insbesondere nicht auf der Außenseite von zumindest einem der Leitungsverbinder applizieren, da diese Heizbänder des Standes der Technik sich nicht in der gewünschten Spiralform bzw. unter Umlenkungen biegen und applizieren lassen. Die bekannten Heizbänder würden beim Biegen brüchig und daher bei dem Versuch einer Applikation auf der Medienleitung und dem zumindest einen endseitig an dieser angeordneten Leitungsverbinder zerstört werden. Durch das Vorsehen der erfindungsgemäßen Heizbandlitze tritt dieser Nachteil nicht auf. Vielmehr ist eine problemlose Applikation auch in Spiralform und unter Umlenkungen der Heizbandlitze möglich, da diese flexibel und biegbar ist, also aus einem dementsprechend elastischen Werkstoff besteht. Hierdurch ist eine Applizierbarkeit auch auf dünnen Medienleitungen mit Abmessungen von 4 x 1 mm möglich, auf mittleren Medienleitungen mit Abmessungen von 5 x 1 mm oder 6 x 1 mm, jedoch ebenfalls auf Medienleitungen mit größeren Abmessungen von beispielsweise 8 x 1 mm, wobei die dünneren Medienleitungen (4 x 1 mm, 5 x 1 mm) sich für den Pkw-, die größeren Medienleitungen (6 x 1 mm, 8 x 1 mm) für den Nutzfahrzeugbereich eignen.

Die Heizbandlitze kann beispielsweise dadurch hergestellt werden, dass zwei Kontaktleiter in einer Vorrichtung in einem Werkzeug parallel zueinander ausgerichtet angeordnet und durch einen Extrusionsvorgang mit dem leitfähigen Kunststoff ummantelt bzw. den darin eingebettet werden. Sofern erforderlich, kann zwischen den beiden Kontaktleitern die isolierende Einrichtung angeordnet werden, beispielsweise eine nicht-leitende Folie, ein nicht-leitendes Band oder ein nicht-leitender Faden. Sofern gewünscht, kann ferner außenseitig die bereits erwähnte Ummantelung der Heizbandlitze angebracht werden z.B. durch einen kontinuierlichen Prozess. Eine solche Heizbandlitze kann auf die Medienleitung durch Umwickeln aufgebracht werden. Auf der Medienleitung kann die Heizbandlitze durch die Fixiereinrichtung in ihrer Position fixiert werden.

Eine derart vorkonfektionierte Medienleitung kann in einer ersten Länge abgelängt werden, die um eine Zugabelänge länger ist als die eigentlich gewünschte Medienleitungslänge. Die Zugabelänge (gesamte Zugabelänge oder an dem jeweiligen Ende zugegebene Zugabelänge) bestimmt sich danach, wieviel Heizbandlitze zum Umwickeln der endseitig an der Medienleitung anzubringenden Leitungsverbinder erforderlich ist. Nach dem ersten Ablängen der Medienleitung wird die Heizbandlitze, ggf. auch ein diese auf der Außenseite der Medienleitung fixierendes Fixierband, im Bereich der Zugabelänge von der Oberfläche der Medienleitung abgewickelt. Nachfolgend wird die Medienleitung in der eigentlich gewünschten zweiten Länge abgelängt und endseitig mit den Leitungsverbindern verbunden. Zuvor wird das jeweilige Ende der Medienleitung gereinigt, um evtl. Klebereste eines Fixierbandes zu entfernen. Das Verbinden mit dem Leitungsverbinder kann in üblicher Weise beispielsweise durch Aufdornen, z.B. Laserschweißen oder in anderer Form erfolgen. Die Leitungsverbinder können gerade oder als Winkelverbinder ausgebildet sein. Ferner können sie als Kupplungen oder als Stecker ausgebildet sein. Der rückgewickelte Abschnitt der Heizbandlitze wird nach dem Verbinden der Medienleitung mit den Leitungsverbindern auf diese aufgewickelt, insbesondere entlang von vorgegebenen Spuren bzw. Nuten, in die die Heizbandlitze eingelegt wird. An dem einen Leitungsverbinder wird endseitig auf die Heizbandlitze bzw. deren Kontaktleiter die isolierende Einrichtung aufgebracht und an dem anderen Ende der Heizbandlitze beispielsweise zwei elektrische Zuleiter als Kontaktierung der beiden Kontaktleiter zum Anschluss an eine Strom- bzw. Spannungsversorgung. Anstelle der genannten Reihenfolge können auch zunächst endseitig an der Heizbandlitze die isolierende Einrichtung und die elektrische Kontaktierung angebracht und erst nachfolgend die Heizbandlitze auf den Leitungsverbindern aufgebracht bzw. angeordnet werden.

Anstelle des Anordnens und Befestigens zweier bereits vorgefertigter Leitungsverbinder können solche Leitungsverbinder auch endseitig an der Medienleitung durch Umspritzen mit einem geeigneten Material aufgebracht werden. Die Heizbandlitze kann auch dort in geeigneter Weise durch Umwickeln bzw. Einlegen in entsprechend vorgesehene Nuten aufgebracht werden. Zur Isolation werden sowohl die Medienleitung als auch die Leitungsverbinder mit dem isolierenden Hüllsystem umgeben. Dieses kann im Bereich der Medienleitung beispielsweise ein Wellrohr oder anderweitig ausgebildetes Hüllrohr sein. Dieses wird zumeist vor dem Aufbringen des zweiten Leitungsverbinders an dem zweiten Ende der Medienleitung auf diese aufgeschoben, wenn eine axiale Applikation vorgesehen werden soll. Bei einem in Längsrichtung geschlitzten Hüllrohr bzw. Wellrohr kann auch eine radiale Applikation nach Montage beider Leitungsverbinder endseitig an der Medienleitung erfolgen. Die Leitungsverbinder werden entweder in üblicher Weise in Kappen aufgenommen oder außenseitig mit einer isolierenden Masse versehen, wie bereits erwähnt.

Bei der Herstellung der Heizbandlitze können die beiden Kontaktleiter anstelle eines Eingießens bzw. Umspritzens der beiden zueinander ausgerichteten Kontaktleiter mit dem elektrisch leitfähigen Kunststoff auch zunächst separat ummantelt und erst im Anschluss daran miteinander verbunden werden, wiederum jeweils mit einem elektrisch leitfähigen Kunststoff, um die Funktion der Heizbandlitze herzustellen.

Die Heizbandlitze weist vorteilhaft eine im Querschnitt ovale oder flachovale Formgebung auf, wobei eine Wickelbarkeit gut möglich sein sollte. Hierdurch ist ein gerichtetes Aufbringen der Heizbandlitze auf der Außenseite der Medienleitung und des bzw. der Leitungsverbinder möglich. Zum Kontaktieren der Kontaktleiter der Heizbandlitze kann zwischen den beiden Kontaktleitern im Bereich der diese ummantelnden und verbindenden elektrisch leitfähigen Kunststoffmasse eine Sollbruchstelle bzw. ein Sollbruchbereich vorgesehen werden, um eine Vereinzelung der beiden Kontaktleiter zu ermöglichen. Zum Kontaktieren kann ferner ein Abisolieren oder Freilasern der Kontaktleiter der Heizbandlitze vorgesehen werden, wobei insbesondere auf der Ober- und/oder Unterseite der Heizbandlitze zumindest ein Fenster freigelegt werden kann, durch das ein Kontaktieren der beiden Kontaktleiter mit den elektrischen Zuleitern möglich ist. Ferner kann beispielsweise eine Art Clip oder anderweitige Einrichtung vorgesehen werden, in den bzw. die sowohl die Enden der elektrischen Zuleitern als auch die Enden der Kontaktleiter der Heizbandlitze eingelegt und darin verbunden werden. Ein Verbinden kann beispielsweise durch Punktschweißen oder Löten erfolgen. Zum Verbinden der Kontaktleiterenden mit den elektrischen Zuleitern kann ferner ein Crimp und zum nachfolgenden Abdichten der Crimpverbindung kann z.B. ein Schrumpfschlauch oder eine ähnliche abdichtende Einrichtung verwendet werden. Vorteilhaft wird zusätzlich eine Abdeckeinrichtung zum vollständigen außenseitigen Abdichten des Verbindungsbereichs bzw. Kontaktierungsbereichs der Kontaktleiter mit den elektrischen Zuleitern vorgesehen, wobei die Abdeckeinrichtung auch einen Teil des Endbereichs der Heizbandlitze in sich aufnehmen kann. Eine solche Abdeckeinrichtung kann beispielsweise ein Verguss mit einem isolierenden bzw. zumindest abdichtenden Material sein. Endseitig ragen nachfolgend nur die beiden voneinander separiert angeordneten elektrischen Zuleiter zum Anschluss der Heizbandlitze an eine Strom- bzw. Spannungsversorgung heraus.

Zur näheren Erläuterung der Erfindung werden im Folgenden Ausführungsbeispiele von dieser näher anhand der Zeichnungen beschrieben. Diese zeigen in:
- Figur 1: eine seitliche teilweise Schnittansicht einer erfindungsgemäßen konfektionierten beheizbaren Medienleitung mit erfindungsgemäßer Heizbandlitze,
- Figur 2: eine skizzenhafte Seitenansicht einer erfindungsgemäßen Medienleitung mit sich um diese herum wendelnder Heizbandlitze,
- Figur 3: eine Querschnittsansicht der Medienleitung mit Heizbandlitze gemäß Figur 2,
- Figur 4: eine Querschnittsansicht einer weiteren Ausführungsform einer erfindungsgemäßen Heizbandlitze ohne außenseitige Ummantelung,
- Figur 5: eine Querschnittsansicht einer erfindungsgemäßen Heizbandlitze mit zwei Kontaktleiteren und außenseitiger isolierender Ummantelung,
- Figur 6: eine Querschnittsansicht einer weiteren Ausführungsform einer erfindungsgemäßen Heizbandlitze mit außenseitiger Ummantelung und isolierender Einrichtung in Form eines nicht-leitenden Fadens zwischen den beiden Kontaktleitern der Heizbandlitze,
- Figur 7: eine Querschnittsansicht einer weiteren alternativen Ausführungsform einer erfindungsgemäßen Heizbandlitze mit innenliegender isolierender Einrichtung in Form einer nicht-leitenden Folie zwischen den beiden Kontaktleitern der Heizbandlitze,
- Figur 8: eine seitliche Detailansicht einer erfindungsgemäßen Medienleitung mit sich um diese herum wendelnder Heizbandlitze und angedeuteten Fixierbändern zum Fixieren der Position der Heizbandlitze auf der Außenfläche der Medienleitung,
- Figur 9: eine Querschnittsansicht einer erfindungsgemäßen beheizbaren Medienleitung im Bereich der Medienleitung mit durch ein Fixierband außenseitig auf der Medienleitung fixierter erfindungsgemäßer Heizbandlitze und außenseitig um Heizbandlitze und Medienleitung herum angeordnetem Hüllrohr,
- Figur 10: eine Querschnittsansicht einer erfindungsgemäßen beheizbaren Medienleitung mit auf der Außenseite der Medienleitung angeordneter und durch eine Fixiereinrichtung fixierter außenseitiger Heizbandlitze und isolierender Ummantelung in Form eines Isolierschaums, der die Medienleitung zusammen mit der Heizbandlitze außenseitig umgibt,
- Figur 11a und Figur 11 b: jeweilige Seitenansichten einer vorkonfektionierten Medienleitung mit erfindungsgemäßer außenseitig auf dieser aufgebrachter Heizbandlitze zum Veranschaulichen der ersten beiden Schritte der Konfektionierung der Medienleitung, wobei in einem ersten Schritt (Figur 11a) die Medienleitung in einer ersten Länge abgelängt wird und in einem zweiten Schritt (Figur 11b) die Heizbandlitze in einem vordefinierten Abschnitt der Medienleitung von dieser abgewickelt und die Medienleitung in einer zweiten Länge, die der gewünschten endgültigen Länge entspricht, abgelängt wird,
- Figur 12: eine Seitenansicht einer mit erfindungsgemäßer Heizbandlitze versehenen Medienleitung mit endseitig befestigten Leitungsverbindern, wobei die Heizbandlitze um die Medienleitung und den Leitungsverbinder herumgewendelt ist,
- Figur 13: eine teilweise geschnittene Seitenansicht einer erfindungsgemäßen Heizbandlitze mit endseitiger Isolation der Kontaktleiterenden an einem Ende und mit elektrischen Zuleitern, die mit den Kontaktleitern der Heizbandlitze kontaktiert sind, am anderen Ende der Heizbandlitze, wobei die Kontaktierungsstellen außenseitig abgedichtet sind,
- Figur 14: eine Prinzipskizze einer Anordnung aus mehreren erfindungsgemäßen konfektionierten beheizbaren Medienleitungen, die zwischen einer Dosiereinheit im Bereich eines Fahrzeugmotors und einem Fahrzeugtank mit Pumpe angeordnet sind, wobei die beiden konfektionierten beheizbaren Medienleitungen im Bereich einer Trennstelle zusammengefügt sind.

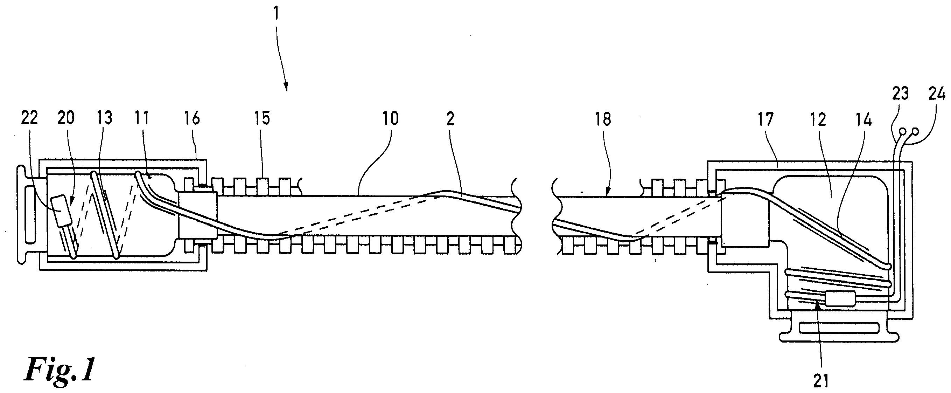

Figur 1 zeigt eine Seitenansicht einer konfektionierten beheizbaren Medienleitung 1 mit einer Medienleitung 10 mit endseitig an dieser angeordneten und mit dieser verbundenen Leitungsverbindern 11, 12. Beide Leitungsverbinder sind als Kupplungen ausgebildet, in die jeweils ein Stecker als Gegenstück zum Anschluss eingefügt werden kann. Der Leitungsverbinder 11 ist als gerader Leitungsverbinder ausgebildet und der Leitungsverbinder 12 als Winkel-Leitungsverbinder. Um beide Leitungsverbinder 11, 12 und die Medienleitung 10, die zwischen diesen angeordnet ist, herum ist eine Heizbandlitze 2 gewickelt. Die Heizbandlitze 2 ist jeweils auf der Außenseite des geraden Leitungsverbinders 11, der Medienleitung 10 und des Winkel-Leitungsverbinders 12 angeordnet. Auf den beiden Leitungsverbindern 11, 12 ist sie in dort für das Anordnen der Heizbandlitze 2 vorgesehene Spuren 13, 14 eingefügt, wobei sie in den Spuren 13, 14 auch ohne weitere Fixierung gehalten werden kann, wenn diese zum klemmenden Halten der Heizbandlitze 2 ausgebildet sind. Die Heizbandlitze 2 ist weder auf der Medienleitung 10 noch auf den Leitungsverbindern 11,12 rückgeführt, sondern erstreckt sich über den Leitungsverbinder 11, über die Medienleitung 10 und den Leitungsverbinder 12 hinweg. Die Heizbandlitze 2 ist ferner nicht von der Medienleitung 10 für ein Vercrimpen oder ähnliches abgehoben, da dort keine Crimpstellen vorgesehen sind. Auf dem Leitungsverbinder 11 ist das erste Ende 20 der Heizbandlitze 2 angeordnet und endseitig durch eine isolierende Einrichtung 22 zumindest im Bereich von deren Kontaktleitern isoliert. An dem gegenüberliegenden zweiten Ende 21 der Heizbandlitze 2 sind endseitig an dieser zwei elektrische Zuleiter 23, 24 zur Kontaktierung der Heizbandlitze 2 angeschlossen bzw. mit den Kontaktleitern der Heizbandlitze 2 verbunden, so dass ein Anschluss der Heizbandlitze an eine Strom- bzw. Spannungsversorgung (nicht gezeigt) ermöglicht wird. Außenseitig sind die beiden Leitungsverbinder 11, 12 und die Medienleitung 10 von einem isolierenden Hüllsystem vorzugsweise durchgängig und unterbrechungsfrei umgeben. Das Hüllsystem ist um die Medienleitung 10 herum als Wellrohr 15 um die beiden Leitungsverbinder 11, 12 herum als isolierende Kappen 16, 17 ausgebildet. Anstelle des Vorsehens solcher isolierender Kappen 16, 17 ist auch ein Vergießen mit einer isolierenden Vergussmasse möglich, so dass hierüber eine isolierende Umhüllung der Leitungsverbinder geschaffen werden kann. Wird ein solches Vergießen bzw. Umgießen und Einbetten der Leitungsverbinder vorgesehen, kann die isolierende Einrichtung 22 zum endseitigen Isolieren der Kontaktleiter der Heizbandlitze 2 entfallen, da eine solche Isolierung durch die isolierende Vergussmasse geschaffen wird.

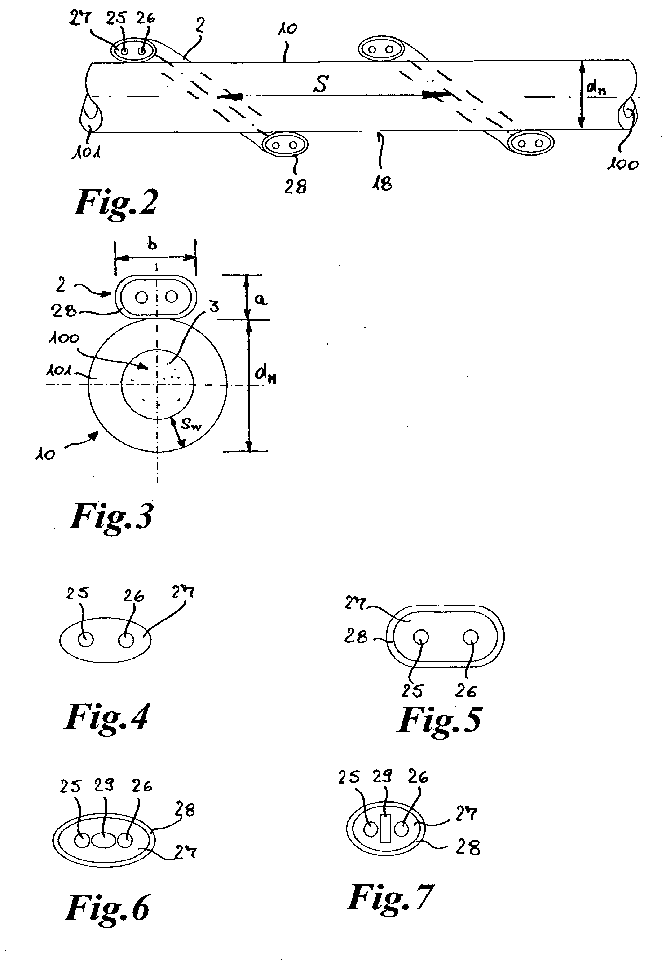

Figur 2 zeigt eine Detailansicht einer mit der Heizbandlitze 2 umwickelten Medienleitung 10. Die Heizbandlitze 2 ist auf der Außenseite 18 der Medienleitung mit einer Steigung S angeordnet. Die Steigung S kann bspw. 40 bis 80 mm, besonders bevorzugt 60 bis 80 mm betragen. Die Medienleitung weist einen Durchmesser d_{M} auf. Dies kann insbesondere auch Figur 3 entnommen werden. Das Verhältnis von Steigung S der Heizbandlitze 2 auf der Medienleitung 10 zu dem Medienleitungsdurchmesser d_{M} kann z.B. 2 bis 3 Steigungen pro Medienleitungsdurchmesser d_{M} betragen. Hierdurch ist nicht nur ein guter Halt, sondern auch ein optimaler Wärmeeintrag in die Medienleitung hin bzw. das innere Lumen 100 der Medienleitung 10 und das dort hindurch strömende Medium 3 möglich (in Figur 3 durch Punkte angedeutet). Das innere Lumen 100 der Medienleitung 10 wird von der Leitungswandung 101 der Medienleitung 10 umgeben. Die Leitungswandung 101 weist eine Wandstärke s_{w} auf.

Die Heizbandlitze 2 weist eine Höhe a und eine Breite b auf. Die Höhe a der Heizbandlitze kann beispielsweise 1,2 bis 1,5 mal die Wandstärke s_{w} der Leitungswandung 101 der Medienleitung 10 betragen. Demgegenüber kann die Breite b der Heizbandlitze 2 bis 3mal die Wandstärke s_{w} der Leitungswandung 101 der Medienleitung 10 betragen. Das Seitenverhältnis von Höhe a zu Breite b der Heizbandlitze 2 kann dementsprechend a : b = 0,3 bis 0,7 betragen. Bei einer entsprechenden Auslegung ist ein optimaler Wärmeeintrag in das innere Lumen 100 der Medienleitung 10 bzw. das darin strömende Medium 3 möglich. In jedem Falle ist auch gute Applizierbarkeit der Heizbandlitze 2 auf der Außenseite 18 der Medienleitung 10 möglich, da in jedem Falle eine Anpassung an unterschiedliche Abmessungen der Medienleitung gegeben ist, also eine gute Applizierbarkeit sowohl bei Medienleitungen mit geringen Abmessungen von z.B. 4 x 1 mm als auch bei Medienleitungen mit großen Abmessungen von 8 x 1 mm.

Wie Figur 3, jedoch insbesondere auch den Figuren 4 bis 7 besser zu entnehmen ist, weist die Heizbandlitze 2 zwei Kontaktleiter 25, 26 auf, die in einen elektrisch leitfähigen Kunststoff 27 eingebettet sind. Der elektrisch leitfähige Kunststoff ist mit elektrische leitfähigen Partikeln dotiert, wie beispielsweise Kohlefasern oder Leitruß, um die elektrische Leitfähigkeit des Kunststoffs zu erzielen. Als Grundmaterial für den Kunststoff kann z.B. ein thermoplastisches Elastomer, wie ein thermoplastisches Polyesterelastomer bzw. thermoplastisches Copolyester verwendet werden. Ebenfalls kann Silikon verwendet werden oder andere Kunststoffe, die zumeist jedoch teurer sind, wie beispielsweise ein Fluorpolymer, Polyphthalamid, Ethylentetrafluorethylen oder vernetztes Polyethylen. Die beiden Kontaktleiter 25, 26 sind parallel zueinander geführt und vollständig in den elektrisch leitfähigen Kunststoff 27 eingehüllt bzw. eingebettet. Durch das Vorsehen des elektrisch leitfähigen Kunststoffs wird eine Parallelschaltung der beiden Kontaktleiter 25, 26 erzielt, was dazu führt, dass keine Rückführung der Heizbandlitze erforderlich ist, sondern diese sich durchgängig kontinuierlich von dem Leitungsverbinder 11 über diesen, die Medienleitung 10 und den Leitungsverbinder 12 hinweg bis zu dessen Ende erstrecken kann.

Der elektrisch leitfähige Kunststoff kann ohne weitere außenseitige Ummantelung vorgesehen werden, wie in Figur 4 angedeutet, oder mit außenseitiger Ummantelung 28, wie in den Figuren 3 sowie 5 bis 7 angedeutet, die insbesondere eine isolierende Ummantelung ist. Um einen Kurzschluss der beiden Kontaktleiter 25, 26 sicher zu vermeiden, kann zwischen diesen eine weitere isolierende Einrichtung 29 vorgesehen werden, wie in Figuren 6 und 7 angedeutet. In Figur 6 ist hierbei ein nicht-leitender Faden zwischen den beiden Kontaktleitern angeordnet und in Figur 7 ein nicht-leitendes Band bzw. eine nichtleitendende Folie als isolierende Einrichtung 29. Durch das Vorsehen der isolierenden Einrichtung 29 zwischen den Kontaktleitern kann eine kompakte und zugleich gegen einen Kurzschluss sichere Einheit geschaffen werden, die nur einen geringen zusätzlichen Materialeinsatz erfordert, nämlich lediglich das Anordnen der isolierenden Einrichtung 29 zwischen den beiden Kontaktleitern 25, 26.

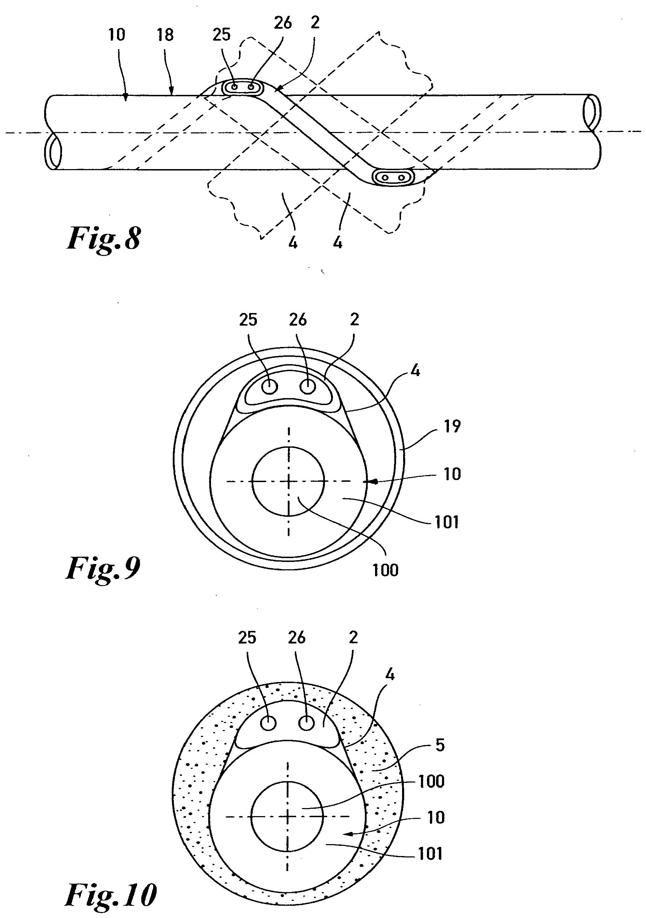

In Figur 8 sind verschiedene Möglichkeiten der Fixierung der Heizbandlitze 2 auf der Außenseite 18 der Medienleitung 10 gezeigt. Hierbei ist beispielsweise ein Umwickeln mit einem Fixierband 4 in Form eines Klebe-, Gewebe- oder Gewebeklebebandes angedeutet. Alternativ ist das Aufschmelzen der Oberfläche der Medienleitungswandung 101 zum Anheften der Heizbandlitze 2 möglich. Ebenfalls kann die Außenseite 18 der Medienleitungswandung 101 haftend oder klebend ausgebildet werden, so dass bereits beim Umwickeln der Medienleitung 10 mit der Heizbandlitze 2 letztere auf der Außenseite 18 der Medienleitungswandung 101 anhaftet. Das Fixieren vermittels eines Fixierbandes 4 kann dementsprechend entfallen. Wird ein Umwickeln mit dem Fixierband 4 vorgesehen, kann dies unter Überkreuzen angeordnet werden, also wie in Figur 8 angedeutet in Form einer Kreuzbewicklung und/oder in Form einer Bewicklung, die der Heizbandlitze 2 folgt und/oder einer Bewicklung, die eine randseitige Überlappung der einzelnen Wicklungen des Fixierbandes 4 vorsieht, wobei dieses mit etwa parallel geführten Wicklungen, die einander randseitig überlappen (können) angeordnet wird. Alternativ zum Vorsehen eines solchen Fixierbandes 4 kann zum Fixieren der Heizbandlitze 2 auf der Außenseite 18 der Medienleitung 10 auch ein Schrumpfschlauch und/oder ein Schaummaterial dienen. Auch Kombinationen der verschiedenen Varianten sind möglich, wie in den Figuren 9 und 10 gezeigt. In Figur 10 ist hierbei zunächst eine Fixierung vermittels des Fixierbandes 4 und nachfolgend ein Ummanteln der Kombination aus Medienleitung 10, Heizbandlitze 2 und Fixierband 4 durch ein isolierendes Schaummaterial 5 gezeigt. Das Schaummaterial kann als isolierende Schicht und zum Fixieren der Heizbandlitze auf der Außenseite der Medienleitung aufgebracht werden. In Figur 9 ist ebenfalls die Heizbandlitze 2 durch das Fixierband 4 in seiner Position und Anordnung auf der Außenseite 18 der Medienleitung 10 fixiert. Die Kombination aus Medienleitung, Heizbandlitze und Fixierband wird von einem Glattrohr 19 umgeben ist. Sofern gewünscht, kann grundsätzlich auch der Aufbau nach Figur 10 zusätzlich noch von einem solchen Glattrohr 19 oder einem Wellrohr 15 umgeben werden. Die Formgebung der Heizbandlitze 2 bestimmt sich auch nach dem Erfordernis der Wickelbarkeit, wobei eine im Querschnitt rundere Formgebung eine gewisse Verdrillbarkeit auf der Medienleitung erlaubt. Bekannte Heizbänder, die eine zu flache Formgebung aufweisen und nicht flexibel und biegsam sind, lassen sich nicht auf kleine Medienleitungsdurchmesser bzw. -radien wickeln.

Die beiden Kontaktleiter 25, 26 der Heizbandlitze 2 können als Drähte oder als Litzen ausgebildet werden, wobei ein dauerhaftes Verbinden mit dem elektrisch leitfähigen Kunststoffmaterial bei Verwendung von Litzen optimaler möglich ist als bei Verwenden von Drähten für die beiden Kontaktleiter. Ferner erweisen sich Litzen als vorteilhaft im Hinblick auf das Vermeiden einer Degradation der Heizbandlitze 2.

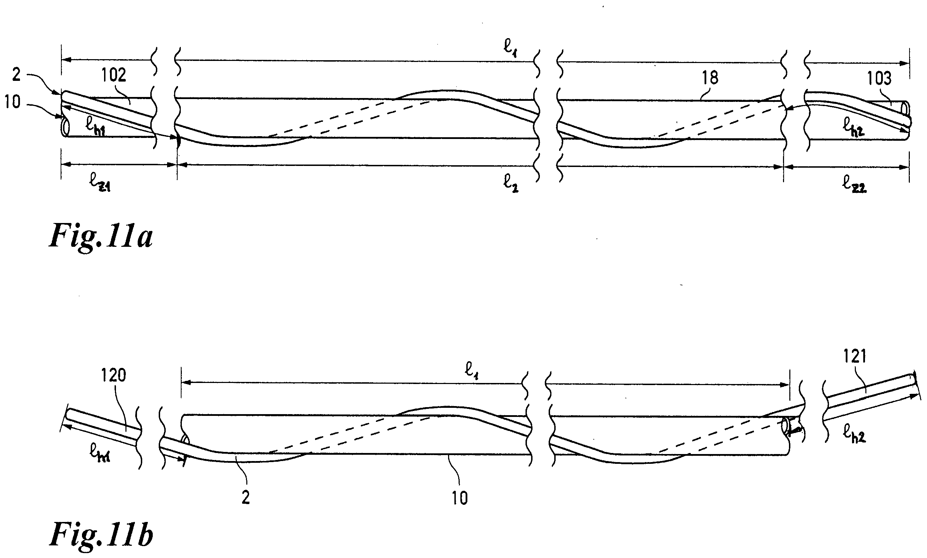

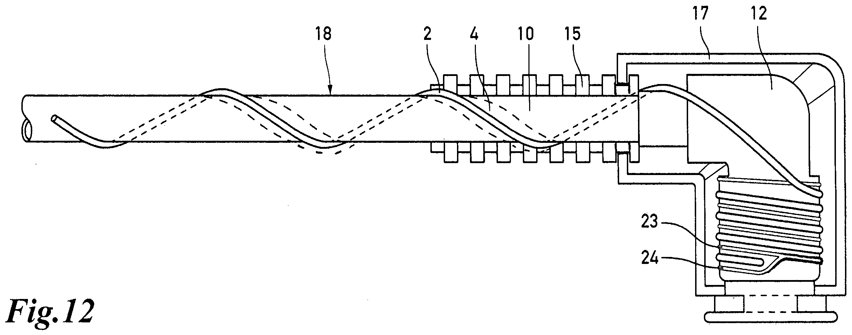

Durch das verwendete Kunststoffmaterial und die gegenüber den im Stand der Technik bekannten Geometrien besonders kompakte Geometrie und die ovale bzw. noch relativ kreisförmige Querschnittsgeometrie, in Verbindung mit den Kontaktleitern, ist die Heizbandlitze 2 flexibel und biegsam, so dass sie in der gewünschten Weise gewendelt auf der Außenseite 18 der Medienleitung und auf der Außenseite der beiden endseitig an dieser angeordneten Leitungsverbinder 11, 12 aufgebracht werden kann. Eine Möglichkeit der Herstellung der konfektionierten beheizbaren Medienleitung 1 besteht darin, dass zunächst die Medienleitung 10 mit der Heizbandlitze 2 vorkonfektioniert wird, wie in Figur 11a angedeutet. Zum weiteren Konfektionieren der Medienleitung wird diese in einer ersten Länge l₁ abgelängt, wobei die erste Länge l₁ der gewünschten endgültigen Länge l₂ zuzüglich einer beidseitig an den Enden der Medienleitung zugegebenen Zugabelänge l_{z1} und l_{z2} entspricht. Die Bemessung der ersten und zweiten Zugabelänge l_{z1} und l_{z2} ergibt sich durch die erforderliche Heizbandlitzenlänge lₕ₁ bzw. lₕ₂, die zum Umwickeln der beiden endseitig an der Medienleitung 10 anzubringenden Leitungsverbinder 11, 12 erforderlich ist. Diese zusätzliche Heizbandlitzenlänge lₕ₁ und lₕ₂ geht aus Figur 11b hervor. Diese wird von den Medienleitungsabschnitten 102, 103, die beim ersten Ablängen zugegeben werden und die zusammen die Differenz zwischen der Länge l₁ und der Länge l₂ ergeben, abgewickelt und nachfolgend die beiden Medienleitungsabschnitte 102, 103 abgetrennt, so dass die abgewickelten freien Enden 120, 121 der Heizbandlitze 2 überstehend über die Medienleitung 10 verbleiben (siehe Figur 11b). Die Medienleitung 10 wird nachfolgend mit den Leitungsverbindern 11, 12 versehen und die Heizbandlitze 2 auf deren Außenseite aufgebracht, wie bereits vorstehend erwähnt. Hierbei ergibt sich beispielhaft die in den Figuren 1 bzw. 12 gezeigte Ausgestaltung, wobei insbesondere vor dem Verbinden der Medienleitung 10 mit dem zweiten Leitungsverbinder das Wellrohr 15 bzw. Hüllrohr 19 auf die Medienleitung 10 mit aufgefügter Heizbandlitze 2 aufgefügt wird, wenn eine axiale Montage erfolgen soll. Bei radialer Montage des Wellrohres 15 bzw. Hüllrohres 19 an der Medienleitung können auch bereits beide Leitungsverbinder 11, 12 endseitig an der Medienleitung 10 montiert sein, wenn das Hüllrohr in Form eines Well- bzw. Glattrohres aufgebracht wird. Üblicherweise nach Montage des Wellrohres 15 bzw. Glattrohres 19 werden die isolierenden Kappen 16, 17 über den Leitungsverbindern 11, 12 angeordnet. Sofern alternativ zu dem Vorsehen der Kappen 16, 17 oder zusätzlich zu diesem ein Verguss der Leitungsverbinder 11, 12 mit einer isolierenden Masse vorgesehen werden soll, kann dies ebenfalls als letzter Schritt bei der Herstellung der konfektionierten beheizbaren Medienleitung vorgesehen werden.

Vor dem Anordnen der isolierenden Kappen 16, 17 oder eines isolierenden Vergusses auf den Leitungsverbindern 11, 12 oder bereits vor dem Aufbringen der zusätzlichen Heizbandlitzenlängen lₕ₁ und lₕ₂ auf den Leitungsverbindern 11, 12 wird die isolierende Einrichtung 22 an dem einen Ende 20 der Heizbandlitze zum endseitigen Isolieren der Enden 125, 126 der Kontaktleiter 25, 26 aufgebracht und an den anderen Enden 225, 226 der Kontaktleiter 25, 26 die elektrischen Zuleiter 23, 24. Wie bereits erwähnt, kann anstelle einer separaten isolierenden Einrichtung 22 bei einem außenseitigen Vergießen des Leitungsverbinders, auf dem das freie Ende der Heizbandlitze 2 angeordnet ist, hier des Leitungsverbinders 11, die isolierende Einrichtung 22 entfallen und dieses Ende 20 der Heizbandlitze 2 in die isolierende Masse des Vergusses eingebettet werden.

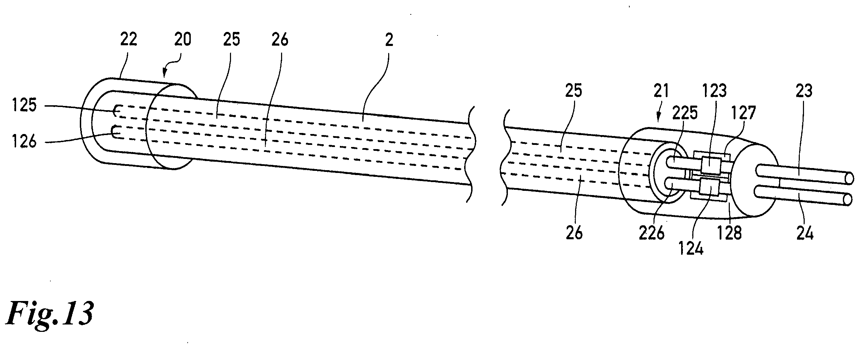

Das endseitige Isolieren und Abdichten der Heizbandlitze 2 einerseits und das endseitige Verbinden mit den elektrischen Zuleitern 23, 24 am anderen Ende der Heizbandlitze 2 ist in Figur 13 angedeutet. Dort sind die beiden elektrischen Zuleiter 23, 24 über Crimpverbindungen 123, 124 mit den beiden Kontaktleitern 25, 26 verbunden. Die Enden 225, 226 der Kontaktleiter 25, 26 und der beiden elektrischen Zuleiter 23, 24 sowie die beiden Crimpverbindungen 123 und 124 sind in einer Abdeckeinrichtung in Form eines Schrumpfschlauchs 127 aufgenommen. Zum weiteren Abdichten nicht nur der Verbindung der beiden Kontaktleiter 25, 26 mit den elektrischen Zuleitern 23, 24, sondern auch von diesen selbst und zum Separieren der elektrischen Zuleiter 23, 24 voneinander ist ferner eine abdichtende Abdeckung 128 vorgesehen. Diese erstreckt sich in der in Figur 13 gezeigten Ausführungsvariante über einen Endabschnitt 129 der Heizbandlitze 2 sowie über die aus diesem herausragenden Kontaktleiter 25, 26 und die elektrischen Zuleitern 22, 24 sowie die in dem Schrumpfschlauch 127 aufgenommenen Crimpverbindungen 123, 124 hinweg. Endseitig ragen aus der dementsprechend konfektionierten Heizbandlitze lediglich noch die beiden elektrischen Zuleiter 23, 24 heraus, so dass zwei gut abgedichtete Enden 20, 21 der Heizbandlitze vorgesehen werden können. Das mit den elektrischen Zuleitern 23, 24 versehene Ende 21 und das mit der isolierenden Einrichtung 22 versehene Ende 20 der Heizbandlitze 2 wird zumeist im Innern des isolierenden Hüllsystems, insbesondere der isolierenden Kappe, das bzw. die den jeweiligen Leitungsverbinder umgibt, aufgenommen.

Die isolierende Einrichtung 22 am anderen Ende der Heizbandlitze 2 dient ebenfalls der Abdichtung gegen ein Eindringen von Feuchtigkeit bzw. des durch die Medienleitung und die Leitungsverbinder strömenden Mediums 3 in das Innere der Heizbandlitze 2 zu den Kontaktleitern 25, 26. Sie kann dementsprechend nicht nur in Form eines Schrumpfschlauchs, sondern insbesondere stoffschlüssig mit dem Kunststoffmaterial 27 und/oder dem Material der außenseitigen Ummantelung 28 verbunden werden. Letzteres kann beispielsweise PFA, also Perfluoralkoxylalkan sein.

Die Materialauswahl des oder der Kunststoffmaterialien der Heizbandlitze wird nicht nur im Hinblick auf die mögliche Flexibilität und Biegsamkeit der Heizbandlitze vorgenommen, sondern auch im Hinblick auf eine Temperaturbeständigkeit, wenn die konfektionierte beheizbare Medienleitung an Orten erhöhter Temperatur, wie insbesondere im Motorraum eines Fahrzeugs, angeordnet werden soll. Hierbei kann insbesondere eine Temperaturbeständigkeit für Temperaturen im Bereich von zumindest 140°C, dauerhaft 160°C und kurzfristig 180°C erforderlich sein. Die bereits genannten thermoplastischen Elastomere ertragen diese Temperaturen und eignen sich daher als Kunststoffmaterial für die Heizbandlitze 2. Auch die isolierenden Materialien an den Enden 20, 21 der Heizbandlitze 2 werden dahingehend ausgewählt, dass sie die genannten Temperaturen auch dauerhaft ertragen.

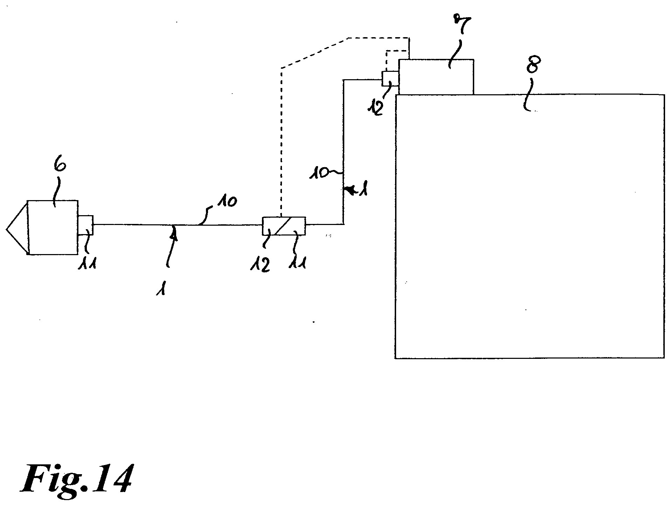

Die konfektionierte beheizbare Medienleitung 1 kann, wie weiter Figur 14 entnommen werden kann, entweder endseitig an ein Aggregat bzw. eine Komponente, wie beispielsweise eine Dosiereinheit 6 im Bereich eines Fahrzeugmotors angeschlossen werden und/oder an eine zweite konfektionierte beheizbare Medienleitung und/oder an eine andere Komponente bzw. ein anderes Aggregat, wie beispielsweise eine Pumpe 7 eines Kraftfahrzeugtanks 8. Die Ausgestaltung der konfektionierten beheizbaren Medienleitung kann dabei bezüglich der Auswahl und Anordnung der Heizbandlitze 2 im Wesentlichen gleich gestaltet werden. Die endseitig angeordneten Leitungsverbinder können jeweils an die Gegebenheiten der Verbindungsstellen angepasst werden, also an die Gegebenheiten seitens der Dosiereinheit 6 und der Pumpe 7. Zum Verbinden der beiden Medienleitungen 10 wird eine von beiden beispielsweise mit einer endseitigen Kupplung als Leitungsverbinder und die andere mit einem Stecker als Leitungsverbinder versehen, so dass ein Ineinanderstecken von Kupplung und Stecker erfolgen kann.

Neben den im Vorstehenden beschriebenen und in den Figuren gezeigten Ausführungsvarianten von konfektionierten beheizbaren Medienleitungen und Verfahren zu deren Herstellung können noch zahlreiche weitere vorgesehen werden, bei denen jeweils als Heizeinrichtung eine Heizbandlitze vorgesehen ist, die zumindest zwei Kontaktleiter und zumindest einen elektrisch leitfähigen Kunststoff mit elektrisch leitfähigen Partikeln in Nanogröße in Kontakt mit den Kontaktleitern umfasst, wobei die Heizbandlitze flexibel und biegbar und außenseitig auf der Medienleitung und dem Leitungsverbinder zumindest teilweise in Wendelform angeordnet ist, und wobei ferner an einem Ende der Heizbandlitze eine elektrische Kontaktierung zum Anschluss an eine Strom- bzw. Spannungsversorgung und an dem anderen Ende eine Isolation der Kontaktleiterenden vorgesehen ist.

### Bezugszeichenliste

- 1: konfektionierte beheizbare Medienleitung
- 2: Heizbandlitze
- 3: Medium
- 4: Fixierband
- 5: Schaummaterial
- 6: Dosiereinheit
- 7: Pumpe
- 10: Medienleitung
- 11: Leitungsverbinder
- 12: Leitungsverbinder
- 13: Spur
- 14: Spur
- 15: Wellrohr
- 16: isolierende Kappe
- 17: isolierende Kappe
- 18: Außenseite
- 19: Glattrohr
- 20: erstes Ende von 2
- 21: zweites Ende von 2
- 22: isolierende Einrichtung
- 23: elektrischer Zuleiter
- 24: elektrischer Zuleiter
- 25: Kontaktleiter
- 26: Kontaktleiter
- 27: elektrisch leitfähiger Kunststoff
- 28: außenseitige Ummantelung
- 29: isolierende Einrichtung
- 100: inneres Lumen
- 101: Leitungswandung
- 102: Medienleitungsabschnitt
- 103: Medienleitungsabschnitt
- 120: freies Heizbandlitzenende
- 121: freies Heizbandlitzenende
- 123: Crimpverbindung
- 124: Crimpverbindung
- 125: Kontaktleiterende
- 126: Kontaktleiterende
- 127: Schrumpfschlauch
- 128: abdichtende Abdeckung
- 129: Endabschnitt
- 225: Kontaktleiterende
- 226: Kontaktleiterende
- S: Steigung von 2
- d_{M}: Medienleitungsdurchmesser
- s_{w}: Wandstärke von 101
- a: Höhe Heizbandlitze
- b: Breite Heizbandlitze
- l₁: erste Länge
- l₂: endgültige Länge
- l_{z1}: erste Zugabelänge
- l_{z2}: zweite Zugabelänge
- lₕ₁: erste Heizbandlitzenlänge
- lₕ₂: zweite Heizbandlitzenlänge

## Patentansprüche

1. Konfektionierte beheizbare Medienleitung (1) mit zumindest einer Medienleitung (10) mit Leitungswandung (101) und innerem Leitungslumen (100) und zumindest einem mit der Medienleitung (10) verbundenen Leitungsverbinder (11,12) zum Anschluss der Medienleitung (10) an zumindest eine Komponente (6,7) und/oder eine andere konfektionierte Medienleitung, und zumindest einer Heizeinrichtung, die entlang der Medienleitung (10) und dem Leitungsverbinder (11,12) gewendelt ist und/oder sich unter Umlenkungen erstreckt, und zumindest einem isolierenden Hüllsystem (15,16,17,19), das die Medienleitung (10) und den Leitungsverbinder (11,12) zumindest größtenteils in axialer umfänglicher Erstreckung umgibt,
**dadurch gekennzeichnet, dass**
die Heizeinrichtung eine Heizbandlitze (2) ist, die zumindest zwei Kontaktleiter (25,26) und zumindest einen elektrisch leitfähigen Kunststoff (27) mit elektrisch leitfähigen Partikeln in Nanogröße in Kontakt mit den Kontaktleitern (25,26) umfasst, wobei die Heizbandlitze (2) durch ihre Geometrie und/oder Werkstoffauswahl und/oder Werkstoffbeschaffenheit flexibel und biegbar ist und ein Höhen-zu-Breiten-Verhältnis (a : b) von 0,3 bis 0,7 aufweist und die Höhe (a) der Heizbandlitze (2) etwa dem 1,2 bis 1,5fachen der Stärke (s_{w}) der Leitungswandung (101) der Medienleitung (10) entspricht, wobei die Heizbandlitze (2) außenseitig auf der Medienleitung (10) und dem Leitungsverbinder (11,12) zumindest teilweise in Wendelform angeordnet und an einem Ende (21) mit elektrischer Kontaktierung (23,24) und an dem anderen Ende (20) mit Isolation (22) der Kontaktleiterenden (125,126) versehen ist, wobei zumindest ein Endabschnitt der Heizbandlitze (2) im Bereich eines der Leitungsverbinder (11,12) angeordnet und die Heizbandlitze (2) crimpstellenfrei als Einlitzer ausgebildet ist.

2. Konfektionierte beheizbare Medienleitung (1) nach Anspruch 1,
**dadurch gekennzeichnet, dass**
die Heizbandlitze (2) an zumindest einem Ende (20,21) rückführungsfrei auf dem jeweiligen Leitungsverbinder (11,12) angeordnet ist, insbesondere zumindest an dem mit der Isolation (22) versehenen Ende (20) oder an dem mit der Isolation (22) versehenen Ende (20) und an dem mit der elektrischen Kontaktierung versehenen Ende (21), insbesondere nur elektrische Zuleiter (23,24) der elektrischen Kontaktierung rückgeführt sind.

3. Konfektionierte beheizbare Medienleitung (1) nach Anspruch 1 oder 2,
**dadurch gekennzeichnet, dass**
der elektrisch leitfähige Kunststoff (27) mit metallischen oder nicht-metallischen elektrisch leitfähigen Partikeln dotiert ist, insbesondere mit Kohlefasern oder Leitruß.

4. Konfektionierte beheizbare Medienleitung (1) nach einem der Ansprüche 1 bis 4,
**dadurch gekennzeichnet, dass**
das Kunststoffmaterial der Heizbandlitze (2), in dem die Kontaktleiter (25,26) angeordnet sind, ein thermoplastisches Elastomer, Silikon, Fluorpolymer, Polyphthalamid, Ethylentetrafluorethylen, vernetztes Polyethylen ist, insbesondere ein Thermoplastisches Polyesterelastomer bzw. Thermoplastisches Copolyester.

5. Konfektionierte beheizbare Medienleitung (1) nach einem der vorstehenden Ansprüche,
**dadurch gekennzeichnet, dass**
die Steigung (S) der Heizbandlitze (2) auf der Medienleitung (10) S = 40 bis 80 mm, insbesondere S = 60 bis 80 mm, beträgt und/oder dass das Verhältnis von Steigung (S) der Heizbandlitze (2) auf der Medienleitung (10) zu dem Medienleitungsdurchmesser (d_{M}) 2 bis 3 Steigungen (S) pro Medienleitungsdurchmesser (d_{M}) beträgt.

6. Konfektionierte beheizbare Medienleitung (1) nach einem der vorstehenden Ansprüche,
**dadurch gekennzeichnet, dass**
die Heizbandlitze (2) ohne außenseitige Isolation ausgebildet oder mit außenseitiger isolierender Ummantelung (28) versehen ist.

7. Konfektionierte beheizbare Medienleitung (1) nach einem der vorstehenden Ansprüche,
**dadurch gekennzeichnet, dass**
die Heizbandlitze (2) zumindest eine zwischen den beiden Kontaktleitern (25,26) angeordnete, diese gegeneinander gegen einen Kurzschluss isolierende Einrichtung (29) aufweist, insbesondere in Form einer nicht-leitenden Folie, eines nicht-leitenden Bandes, eines nicht-leitenden Fadens.

8. Konfektionierte beheizbare Medienleitung (1) nach einem der vorstehenden Ansprüche,
**dadurch gekennzeichnet, dass**
die Kontaktleiter (25,26) in Form von Litzen oder in Form von Drähten ausgebildet sind.

9. Konfektionierte beheizbare Medienleitung (1) nach einem der vorstehenden Ansprüche,
**dadurch gekennzeichnet, dass**
die Isolation (22) der Kontaktleiterenden (125,126) durch Einbetten der Kontaktleiterenden (125,126,225,226) in einen Teil eines durch Umspritzen des Leitungsverbinders (11) erzeugten Hüllsystems geschaffen ist.

10. Konfektionierte beheizbare Medienleitung (1) nach einem der vorstehenden Ansprüche,
**dadurch gekennzeichnet, dass**
zum Vermeiden eines Abhebens der Heizbandlitze (2) von der Oberfläche (18) der Medienleitung (10) ist zumindest eine Fixiereinrichtung vorgesehen, die die Heizbandlitze (2) außenseitig auf der Medienleitung (10) fixiert, insbesondere ein Klebe-, Gewebe- oder Gewebeklebeband (4) und/oder zumindest ein Schaummaterial und/oder zumindest ein Schrumpfschlauch.

11. Konfektionierte beheizbare Medienleitung (1) nach Anspruch 8,
**dadurch gekennzeichnet, dass**
das Klebe-, Gewebe- oder Gewebeklebeband (4) unter zumindest randseitigem Überlappen und/oder Überkreuzen auf der Heizbandlitze (2) und der Außenseite (18) der Medienleitung (10) aufgewickelt ist oder dass das Klebe-, Gewebe- oder Gewebeklebeband (4) überlappungsfrei auf der Heizbandlitze (2) und der Außenseite (18) der Medienleitung (10) aufgewickelt ist.

12. Verfahren zum Herstellen einer konfektionierten beheizbaren Medienleitung (1) nach einem der Ansprüche 1 bis 11,
**dadurch gekennzeichnet, dass**
eine Medienleitung mit einer Heizbandlitze (2) bewickelt vorkonfektioniert wird, die Medienleitung anwendungsspezifisch in einer ersten Länge (l₁) abgelängt wird, die der gewünschten Medienleitungslänge (l₂) zuzüglich einer Zugabelänge (l_{z1},l_{z2}) entspricht, die die zum Umwickeln. des zumindest einen Leitungsverbinders (11;12) und eines Übergangsbereichs zwischen Medienleitung (10) und Leitungsverbinder (11,12) erforderlichen Heizbandlitzenlänge (lₕ₁,lₕ₂) trägt, die Heizbandlitze (120,121) von dem der Zugabelänge (l_{z1},l_{z2}) entsprechenden Medienleitungsabschnitt (102,103) abgewickelt wird, die Medienleitung in der gewünschten Medienleitungslänge (l₂) zu der Medienleitung (10) abgelängt wird, die Medienleitung (10) mit dem zumindest einen Leitungsverbinder (11,12) versehen wird, der zumindest eine Leitungsverbinder (11,12) mit dem von dem zumindest einen zugegebenen Medienleitungsabschnitt (102,103) abgewickelten freien Heizbandlitzenende (120,121) umwickelt wird, und ein erstes Ende (20) der Heizbandlitze (2) mit einer Isolation (22) der Kontaktleiterenden (125,126) und ein zweites Ende (21) der Heizbandlitze (2) mit einer elektrischen Kontaktierung (23,24) der Kontaktleiterenden (225,226) versehen wird.

## Claims

1. Prefabricated heatable media line (1) having at least one media line (10) with a line wall (101) and an inner line lumen (100), and at least one line connector (11, 12) connected to the media line (10) for connecting the media line (10) to at least one component (6, 7) and/or to another prefabricated media line, and at least one heating device which is coiled and/or extends with deflections along the media line (10) and the line connector (11, 12), and at least one insulating cladding system (15, 16, 17, 19) which encloses the media line (10) and the line connector (11, 12) at least in large part in the axial peripheral extent,
**characterised in that**
the heating device is a heater-band strand (2) which comprises at least two contact conductors (25, 26) and at least one electrically conductive plastics material (27) with electrically conductive nano-sized particles in contact with the contact conductors (25, 26), wherein the heater-band strand (2) is flexible and bendable as a result of its geometry and/or the choice of material and/or the nature of the material and has a height-to-width ratio (a : b) of from 0.3 to 0.7 and the height (a) of the heater-band strand (2) corresponds to approximately from 1.2 to 1.5 times the thickness (s_{w}) of the line wall (101) of the media line (10), wherein the heater-band strand (2) is arranged on the outside of the media line (10) and the line connector (11, 12) at least partially in coiled form and is provided at one end (21) with electrical contacting (23, 24) and at the other end (20) with insulation (22) for the contact conductor ends (125, 126), wherein at least one end portion of the heater-band strand (2) is arranged in the region of one of the line connectors (11, 12) and the heater-band strand (2) is in the form of an in-strand without crimp points.

2. Prefabricated heatable media line (1) according to claim 1,
**characterised in that**
the heater-band strand (2) is arranged on the respective line conductor (11, 12) without being fed back at least at one end (20, 21), in particular at least at the end (20) provided with the insulation (22) or at the end (20) provided with the insulation (22) and at the end (21) provided with the electrical contacting, in particular only electrical supply lines (23, 24) of the electrical contacting are fed back.

3. Prefabricated heatable media line (1) according to claim 1 or.2,
**characterised in that**
the electrically conductive plastics material (27) is doped with metallic or non-metallic electrically conductive particles, in particular with carbon fibres or conductive carbon black.

4. Prefabricated heatable media line (1) according to any one of claims 1 to 4,
**characterised in that**
the plastics material of the heater-band strand (2) in which the contact conductors (25, 26) are arranged is a thermoplastic elastomer, silicone, fluoropolymer, polyphthalamide, ethylene tetrafluoroethylene, crosslinked polyethylene, in particular a thermoplastic polyester elastomer or thermoplastic copolyester.

5. Prefabricated heatable media line (1) according to any one of the preceding claims,
**characterised in that**
the pitch (S) of the heater-band strand (2) on the media line (10) S = from 40 to 80 mm, in particular S = from 60 to 80 mm, and/or **in that** the ratio of the pitch (S) of the heater-band strand (2) on the media line (10) to the media line diameter (d_{M}) is from 2 to 3 pitches (S) per media line diameter (d_{M}).

6. Prefabricated heatable media line (1) according to any one of the: preceding claims,
**characterised in that**
the heater-band strand (2) does not have insulation on the outside or is provided with an insulating jacket (28) on the outside.

7. Prefabricated heatable media line (1) according to any one of the preceding claims,
**characterised in that**
the heater-band strand (2) has at least one means (29), in particular in the form of a non-conducting film, a non-conducting tape, a non-conducting thread, which is arranged between the two contact conductors (25, 26) and insulates them against a short circuit.

8. Prefabricated heatable media line (1) according to any one of the preceding claims,
**characterised in that**
the contact conductors (25, 26) are in the form of strands or in the form of wires.

9. Prefabricated heatable media line (1) according to any one of the preceding claims,
**characterised in that**
the insulation (22) of the contact conductor ends (125, 126) is created by embedding the contact conductor ends (125, 126, 225, 226) in part of a cladding system produced by overmoulding the line connector (11).

10. Prefabricated heatable media line (1) according to any one of the preceding claims,
**characterised in that**
in order to prevent the heater-band strand (2) from lifting from the surface (18) of the media line (10) there is provided at least one fixing means which fixes the heater-band strand (2) to the outside of the media line (10), in particular an adhesive, fabric or adhesive fabric tape (4) and/or at least one foam material and/or at least one shrink-on tube.

11. Prefabricated heatable media line (1) according to claim 8,
**characterised in that**
the adhesive, fabric or fabric adhesive tape (4) is wound on the heater-band strand (2) and the outside (18) of the media line (10) in such a manner that it overlaps and/or crosses at least at the edges, or **in that** the adhesive, fabric or fabric adhesive tape (4) is wound on the heater-band strand (2) and the outside (18) of the media line (10) without overlapping.

12. Method for producing a prefabricated heatable media line (1) according to any one of claims 1 to 11,
**characterised in that**
a media line with a heater-band strand (2) wound around it is prefabricated, the media line is cut for a specific application to a first length l₁) which corresponds to the desired media line length (l₂) plus an additional length (l_{z1}, l_{z2}) which carries the heater-band strand length (lₕ₁, lₕ₂) required for winding around the at least one line connector (11, 12) and a transition region between the media line (10) and the line connector (11, 12), the heater-band strand (120, 121) is unwound from the media line portion (102, 103) corresponding to the additional length (l_{z1}, l_{z2}), the media line is cut to the desired medial line length (l₂) for the media line(10), the media line (10) is provided with the at least one line connector (11, 12), the free heater-band strand end (120, 121) unwound from the at least one added media line portion (102, 103) is wound around the at least one line connector (11, 12), and a first end (20) of the heater-band strand (2) is provided with insulation (22) for the contact conductor ends (125, 126) and a second end (21) of the heater-band strand (2) is provided with electrical contacting (23, 24) for the contact conductor ends (225, 226).

## Revendications

1. Ligne de media chauffante préfabriquée (1) comprenant au moins une ligne de media (10) comportant une paroi de ligne (101) et une lumière intérieure de ligne (100) et au moins un connecteur de ligne (11, 12) relié à la ligne de media (10) pour connecter la ligne de media (10) à au moins un composant (6,7) et/ou à une autre ligne de media préfabriquée, et au moins un dispositif de chauffage enroulé autour et/ou s'étendant avec des ondulations sur la ligne de media préfabriquée et le connecteur de ligne (11, 12), et au moins un système de gaine isolante (15, 16, 17, 19) entourant la ligne de media (10) et le connecteur de ligne (11, 12) au moins sensiblement selon une direction axiale circonférentielle,
**caractérisée en ce que**
le dispositif de chauffage est un cordon chauffant (2) comprenant au moins deux conducteurs de contact (25, 26) et au moins une matière plastique (27) conductrice d'électricité comprenant des nano-particules électriquement conductrices en contact avec les conducteurs de contact (25, 26), le cordon chauffant (2) étant flexible et pliable grâce à sa géométrie et/ou au choix du matériau et/ou à la qualité du matériau, et présente un rapport hauteur/largeur compris entre 0,3 et 0,7, et la hauteur (a) du cordon chauffant (2) est égale à environ 1,2 à 1,5 fois l'épaisseur (S_{w}) de la paroi (101) de la ligne de media (10), le cordon chauffant (2) étant disposé au moins partiellement en forme d'hélice à la périphérie de la ligne de media (10) et du connecteur de ligne (11, 12) et étant pourvu à une extrémité (21) d'un contact électrique (23, 24) et à l'autre extrémité (20) d'une isolation (22) des extrémités (125, 126) des conducteurs de contact, au moins une section d'extrémité du cordon chauffant (2) étant disposée dans la zone de l'un des connecteurs de ligne (11, 12) et le cordon chauffant (2) étant conçu d'un seul tenant sans sertissage.

2. Ligne de media chauffante préfabriquée (1) selon la revendication (1),
**caractérisée en ce que**
le cordon chauffant (2) est disposé à moins une extrémité (20, 21) sans retour sur le connecteur de ligne respectif (11, 12), en particulier au moins sur celui avec l'isolant (22) prévu à l'extrémité (20) ou sur celui avec l'isolant (22) prévu à l'extrémité (20) et sur celui avec le contact électrique prévu à l'extrémité (21), en particulier seul les départs électriques (23, 24) des contacts électriques présentent des retours.

3. Ligne de media chauffante préfabriquée (1) selon l'une des revendications 1 ou 2,
**caractérisée en ce que**,
la matière plastique (27) conductrice d'électricité est dopée avec des particules métalliques ou non métalliques conductrices d'électricité, notamment avec des fibres de carbone ou du noir de carbone conducteur.

4. Ligne de media chauffante préfabriquée (1) selon l'une des revendications 1 à 4,
**caractérisée en ce que**,
la matière plastique du cordon chauffant (2), dans lequel les conducteurs de contact (25, 26) sont disposés, est un élastomère thermoplastique, du silicone, un fluoropolymère, un polyphthalamide, de l'éthylène-tétrafluoroéthylène, du polyéthylène réticulé, en particulier un élastomère de polyester thermoplastique tel qu'un copolyester thermoplastique.

5. Ligne de media chauffante préfabriquée (1) selon l'une des revendications précédentes,
**caractérisée en ce que**
le pas (S) du cordon chauffant (2) sur la ligne de media (10) est S = 40 à 80 mm, en particulier S = 60 à 80 mm, et/ou **en ce que** le rapport du pas (S) du cordon chauffant (2) sur la ligne de media (10) au diamètre de la ligne de media (d_{M}) est de 2 à 3 pas (S) par diamètre de ligne de media (d_{M}).

6. Ligne de media chauffante préfabriquée (1) selon l'une des revendications précédentes,
**caractérisée en ce que**
le cordon chauffant (2) est conçu sans isolation extérieure ou est pourvu d'une gaine isolante extérieure (28).

7. Ligne de media chauffante préfabriquée (1) selon l'une des revendications précédentes,
**caractérisée en ce que**
le cordon chauffant (2) comporte au moins un dispositif (29) disposé entre les deux. conducteurs de contact (25, 26), les isolant l'un de l'autre contre un court-circuit, en particulier sous la forme d'une feuille non conductrice, d'un ruban non conducteur, d'un fil non conducteur.

8. Ligne de media chauffante préfabriquée (1) selon l'une des revendications précédentes,
**caractérisée en ce que**
les conducteurs de contact (25, 26) sont sous forme de torons ou de fils.

9. Ligne de media chauffante préfabriquée (1) selon l'une des revendications précédentes,
**caractérisée en ce que**
l'isolation (22) des extrémités des conducteurs de contact (125, 126) est créée en encastrant les extrémités des conducteurs de contact (125, 126, 225, 226) dans une partie de gaine produite par surmoulage du connecteur de ligne (11).

10. Ligne de media chauffante préfabriquée (1) selon l'une des revendications précédentes,
**caractérisée en ce qu'**au
moins un dispositif de fixation est prévu pour empêcher le cordon chauffant (2) de se soulever de la surface (18) de la ligne de media (10), qui fixe le cordon chauffant (2) à l'extérieur de la ligne de media (10), notamment un adhésif, un tissu ou un ruban adhésif en tissu (4) et/ou au moins un matériau en mousse et/ou au moins un tube rétractable.

11. Ligne de media chauffante préfabriquée (1) selon la revendication 8,
**caractérisée en ce que**
l'adhésif, le tissu ou le ruban adhésif en tissu (4) est enroulé sur le cordon chauffant (2) et sur la face extérieure (18) de la ligne de media (10) en se chevauchant et/ou en se croisant au moins sur les bords, ou **en ce que** l'adhésif, le tissu ou le ruban adhésif en tissu (4) est enroulé sans chevauchement sur le cordon chauffant (2) et sur la face extérieure (18) de la ligne de media (10).

12. Procédé de fabrication d'une ligne de media préfabriquée (1) selon l'une des revendications 1 à 11,
**caractérisé en ce qu'**une
ligne de media est préfabriquée avec enroulement d'un cordon chauffant (2), la ligne de media est coupée à une première longueur (l₁) qui correspond à la longueur souhaitée (l₂) de la ligne de media majorée d'une longueur supplémentaire (l_{z1}, l_{z2}), qui est la longueur nécessaire de cordon chauffant (lₕ₁, lₕ₂) pour l'enroulement autour de l'au moins un connecteur de ligne (11, 12) et pour une zone de transition entre la ligne de media (10) et le connecteur de ligne (11, 12), le cordon chauffant (120, 121) est déroulé de la section de la ligne de media (102, 103) correspondant à la longueur supplémentaire (l_{z1}, l_{z2}), la ligne de media est coupée à la longueur souhaitée (l₂) pour la ligne de media (10), la ligne de media (10) est équipée d'au moins un connecteur de ligne (11, 12), l'extrémité libre de cordon chauffant (120, 121) déroulée de l'au moins une section de media (102, 103) est enroulée autour de l'au moins un connecteur de ligne (11, 12), et une première extrémité (20) du cordon chauffant (2) est enveloppée d'une isolation (22) des extrémités des conducteurs de contact (125, 126) et une deuxième extrémité (21) du cordon chauffant (2) est munie d'un contact électrique (23, 24) des extrémités des conducteurs de contact (225,226).
